# EUROPÄISCHE PATENTSCHRIFT

(11) **EP 3 003 927 B1**
(45) Veröffentlichungstag und Bekanntmachung des Hinweises auf die Patenterteilung: **07.03.2018**
(21) Anmeldenummer: 14728934.2
(22) Anmeldetag: 05.06.2014
(51) Int. Cl.: B65G 47/08, B65B 21/06, B65B 35/40, B65G 47/28, B65B 59/00, B65G 54/02, F16H 25/10, F16H 25/14, F16H 53/04, H02K 41/02, B65G 47/31

(54) **VORRICHTUNG ZUM ABTEILEN VON VERPACKUNGSEINHEITEN**
DEVICE FOR SEPARATING PACKAGING UNITS
DISPOSITIF POUR SÉPARER UNITÉS D'EMBALLAGE

(30) Priorität: 07.06.2013 DE 102013105932
(43) Veröffentlichungstag der Anmeldung: 13.04.2016
(73) Patentinhaber: KHS GmbH, 44143 Dortmund (DE)
(72) Erfinder: WAGNER, Stefan, 46509 Xanten (DE)
(86) Internationale Anmeldenummer: PCT/EP2014/061675
(87) Internationale Veröffentlichungsnummer: WO 2014/195398

(56) Entgegenhaltungen:
- EP-A1- 1 123 886
- WO-A1-01/08978
- WO-A2-2008/022296
- DE-A1-102008 040 204
- DE-A1-102009 029 314
- NL-A- 285 061
- US-A- 2 910 200
- US-A- 3 731 715
- US-A- 4 637 509
- US-A1- 2004 112 714

## Beschreibung

Die Erfindung bezieht sich auf eine Vorrichtung zum Abteilen von Verpackungseinheiten in einer Verpackungsmaschine zur Herstellung von Gebinden gemäß dem Patentanspruch 1, wobei die Vorrichtung mindestens eine Abteil- und Verdichtereinheit zum Abteilen und Verdichten einer vorbestimmten Anzahl an Behältern aufweist und wobei mit der mindestens einen Abteil- und Verdichtereinheit verdichtete Behältergruppen gebildet werden, wobei die Vorrichtung zum Abteilen von Verpackungseinheiten Abteilsegmente umfasst, die von unterhalb einer Transportebene temporär in diese eingreifen und anschließend wieder unter die Transportebene zurückgeführt werden, wobei die Abteilsegmente jeweils an einem Bewegungselement gehalten sind und wobei das Abteilsegment ein Eingreifelement und ein mit diesem in Verbindung stehendes Führungselement aufweist, welches Führungselement an einer Steuerkurve entlang geführt wird, mittels welcher der Ort oder der Bereich der vertikalen Bewegung des Eingreifelementes gesteuert werden kann, und wobei das Eingreifelement auf oder an dem Abteilelement gelagert und/oder geführt ist.

Behälter im Sinne der Erfindung sind beispielsweise Flaschen, Dosen, Tuben, Pouches, jeweils aus Metall, Glas und/oder Kunststoff, also zum Beispiel auch PET-Flaschen, aber auch andere Packmittel, insbesondere solche, die zum Abfüllen von flüssigen oder viskosen Produkten bare auch zur Aufnahme von Lebensmitteln geeignet sind, aber auch bereits zu Gruppen (Mehrfachpack, Gebinde) zusammen gefasste Behälter.

Im Detail erfolgt die Herstellung der Gebinde z.B in einer so genannten Verpackungsmaschine in der Weise, dass die Behälter auf einer Transportebene eines Transporteurs aufstehend und mit ihrer Behälterachse in vertikaler Richtung oder im Wesentlichen vertikaler Richtung orientiert in einem Massentransport bzw. in einem breiten Behälterstrom zugeführt werden, in dem die Behälter hinsichtlich markanter Behälter und/oder Ausstattungsmerkmale eine willkürliche Orientierung aufweisen können. Dieser breite Behälterstrom wird dann durch Gasseneinteilung in mehrere einspurige Behälterströme umgewandelt. In weiteren Verfahrensschritten erfolgt das Abteilen der die späteren Gebinde bzw. deren Behältergruppen bildenden Behälter aus den einspurigen Behälterströmen, das Zusammenführen der notwendigen Anzahl von Behältern jeweils zu einer verdichteten Behältergruppe, in der die Behälter mit mehreren Mantel- oder Umfangsflächen, also mit den Kontakt- oder Berührflächen gegeneinander anliegen, und dass Verbinden der Behälter jeder Behältergruppe zu dem kompakten und festen bzw. stabilen Gebinde.

Dabei können die einzelnen Behälter nach markanten Gestaltungsmerk-malen ausgerichtet werden, so dass die jeweiligen Gebinde je nach den jeweiligen Bedürfnissen orientierte Behälter aufweisen. Möglich ist, die einzelnen Behälter des Gebindes miteinander zu verbinden, wobei z.B. eine Umschlingung z.B. mit einem Halteband oder einem anderen umfassenden Element denkbar ist. Ein solches umfassendes Element kann zum Beispiel ein Kartonzuschnitt oder ein Folienabschnitt sein, welcher um das betreffliche Gebinde gelegt und entsprechend befestigt wird. Die Kartonenden können miteinander verklebt werden. In einem Schrumpftunnel können die zunächst anliegenden Folien aufgeschrumpft werden. Denkbar ist auch, dass die Gebinde eine stabilisierende Unterlage bekommen, welche z.B. als Kartonzuschnitt ausgeführt ist, auf welcher die Behälter aufstehen. Eine solche Unterlage ist sinnvoll, wenn das spätere Gebinde z.B. aus mehreren Lagen von Teilgebinden gebildet werden soll. Dabei kann an der Unterlage angegriffen werden, so dass das eine Teilgebinde auf das andere gesetzt wird. Anschließend kann ein umfassendes Element vorgesehen werden, um die gestapelten Gebinde zu umfassen. Die Kartonzuschnitte werden als solche bevorzugt im entfalteten Zustand aus einem Magazin entnommen und können vor oder nach Zuführung zu dem späteren Gebinde gefalten werden, wobei eine entsprechend ausgeführte Faltstation Einsatz findet. Zur Bildung der Folienabschnitte wird eine Folienrolle zu einer Folienbahn entrollt, wobei die betrefflichen Folienabschnitte von der Folienbahn abgeschnitten werden. Hierzu ist eine Folienschneidstation sinnvoll einsetzbar, so dass der jeweilige Folienabschnitt die geforderten Dimensionen des jeweils zu verpackenden Gebindes hat. In einer weiteren Ausführung kann zwischen den Behältern der späteren Gebinde ein Abstandselement angeordnet werden, welches z.B. als Steg oder beispielsweise als Gefache ausgeführt ist. Dieses Gefache ist zumeist aus einem Karton gebildet, und wird vor dem Einsetzen in das spätere Gebinde aufgefacht, wobei ein Abstandselementeinsetzer, welcher beispielhaft als Stegeinsetzer oder Gefacheeinsetzer bezeichnet werden kann, Verwendung findet. Ist das Gebinde gebildet und hat gegebenenfalls den Schrumpftunnel verlassen, kann ein Packrouter zur Neuorientierung des Gebindes vorgesehen sein.

Es ist bekannt, mehrere Artikel jeweils zu einer Artikelgruppe zusammen zu fassen oder zu formieren und aus den Artikelgruppen unter Verwendung von Schrumpffolien (z.B. US 7 726 464 A1) feste bzw. transportfähige Lager- und Transporteinheiten oder Gebinde herzustellen. Nachteilig ist hierbei unter anderem, dass die dabei verwendeten Folien sowie insbesondere das Aufschrumpfen der Folien durch Wärme- oder Energieeintrag nicht unerhebliche Kosten verursacht.

Vorgeschlagen wurde auch bereits, transportfähige Gebinde dadurch herzustellen, dass die jeweils zu einer Behältergruppe formierten Behälter durch eine die Behältergruppe schlaufenartig umgreifende Umreifung (DE 10 2009 025 824 A1, DE 10 2009 044 271 A1, DE 41 26 212 A1) verpackt, d.h. miteinander zu einem Gebinde verbunden werden, was eine besonders kostengünstige und einfache Möglichkeit zur Herstellung von Gebinden bzw. Transport- und Lagereinheiten darstellt. Die Umreifung kann auch mit den Behältern verklebt werden. Nachteilig bei der Umreifung ist allerdings, dass beim ersten Entnehmen eines Behälters aus einem solchen Gebinde die in dem Gebinde verbliebenen Behälter durch die Umreifung nicht mehr zusammengehalten werden. Dies gilt nicht nur dann, wenn die Umreifung getrennt oder zerschnitten wird, sondern auch dann, wenn es möglich ist, ohne Durchtrennen der Umreifung einen Behälter aus dem Gebinde zu entnehmen.

Weiterhin besteht beim Transport derartiger Gebinde auf einem Bandfördermittel immer die Gefahr, dass sich zylindrische oder weitgehend zylindrische Artikel, wie Dosen, Flaschen oder Behälter durch Vibration, Stöße etc. eine nestende Position einnehmen, also in die Lücke der Nachbarreihe rutschen. Um dies zu verhindern muss bei bekannten Gebinden eine sehr große Spannung auf die Umreifung gebracht werden.

Die DE 10 2006 037 105 A1 dagegen befasst sich mit einem Verfahren zum Zusammenstellen von Flaschenpaketen, bei welchem auf beiden Seiten einer Bahn ein Drehstern vorgesehen wird, welcher Flaschenhälse in Klammern an Flachträgern hineindrückt. Das Flaschenpaket wird noch mit einem Band oder einer Umhüllung (Folie) umfasst.

Gemäß der DE 23 31 193 wird an Behälter ein Klebemittel in schmalen Flächen oder Reihen angebracht, wobei jeweils benachbarte Flächen, welche nicht mit Klebemittel versehen sind, ein Greifen der Packung zum Zwecke des Tragens ermöglichen soll. An den Klebestellen kleben die Behälter aneinander. Die EP 2 096 039 A1 offenbart ebenfalls Behälter mit einem Klebemittel zu versehen, wobei aber zudem noch eine Schrumpffolie um das Flaschenpaket angeordnet wird.

Aus der EP 2 500 296 A1 ist eine Vorrichtung und ein Verfahren zum Gruppieren von Stückgut entlang einer Förderstrecke bekannt. Mittels in den Förderstrom eingreifenden Einteilerelementen werden Lücken zwischen einander folgenden Stückgütern ausgebildet. Die Einteilerelemente sind in ihrer Vorschubbeweung und/oder -geschwindigkeit wegen der verwendeten getriebelosen Direktantriebe entlang der Bewegungsbahn individuell steuerbar. Die Einteilerelemente tauchen von unterhalb der Bewegungsbahn auf, teilen eine Anzahl an Behältern von dem Behälterstrom ab, halten den Behälterstrom zunächst auf, so dass zu den abgetrennten Behältern eine Lücke entsteht: Die Einteilerelemente beschleunigen dann und tauchen wieder unter das Niveau der Bewegungsbahn. Insofern kombiniert die EP 2 500 296 A1 eigentlich nur die vor deren Anmelde- bzw. Prioritätstag bekannte Einteiltechnik mit Einteilfingern, die auf umlaufenden Balken angeordnet sind, mit einem Antriebssystem, welches durch getriebelose Direktantriebe gebildet ist.

Die DE 10 2011 081 705 A1 beschäftigt sich ebenfalls mit einem Verfahren und einer Vorrichtung zum Gruppieren von Behältern. Dabei weist die Vorrichtung zwei Fördereinrichtungen mit unterschiedlichen Geschwindigkeiten auf. Die zweite Fördereinrichtung ist schneller, als die erste Fördereinrichtung. So werden die, die zweite Fördereinrichtung erreichenden Behälter schneller bewegt als die Behälter auf der ersten Fördereinrichtung. So entsteht zwischen den Behältern auf der zweiten Fördereinrichtung eine Lücke. Mittels einer Schiebe- oder Rückhalteeinrichtung werden die Behälter auf der zweiten Fördereinrichtung beschleunigt, verzögert und/oder gegeneinander verschoben, so dass die ursprüngliche Lücke verändert ist. Dabei wird z.B. der nacheilende Behälter auf den voreilenden Behälter geschoben. Die entsprechende Beschleunigung wird mittels linearmotorischer Antriebe erreicht, wobei die einzelnen Elemente der Schiebe- oder Rückhalteeinrichtung individuell steuerbar sind.
Die DE 10 2008 040 204 A1 offenbart eine Transportvorrichtung zum Transportieren von Produkten mit einem Linearantrieb, einer umlaufenden Fördereinrichtung mit zwei zueinander parallelen geraden Förderbereichen, die jeweils durch einen Linearantrieb gebildet werden, und zwei jeweils ein Ende der geraden Förderbereiche verbindenden Kurvenförderbereichen, und einer Vielzahl von Förderelementen, welche entlang der umlaufenden Fördereinrichtung umlaufen und die zu fördernden Produkte entlang zumindest eines Teils der Fördereinrichtung fördern, wobei die Förderelemente entlang einer Führungsbahn geführt sind, wobei der Linearantrieb einen ersten linearen Streckenabschnitt und einen zweiten linearen Streckenabschnitt umfasst, welche parallel zu den geraden Förderbereichen angeordnet sind, und wobei die Kurvenförderbereiche der Fördereinrichtung antriebslos ausgebildet sind.

Die US 2004/0112714 A1 lehrt eine Vorrichtung zum Gruppieren von Gegenständen, die in eine Schachtel geladen werden sollen und der Vorrichtung von einem Einspeisungsstrom an einem Einspeisungsende einer Verpackungsmaschine zugeführt werden, wobei die Vorrichtung führende und nachlaufende Abstandselemente umfasst, die angeordnet sind, um sich entlang eines vorbestimmten Weges zu bewegen, wobei jedes Abstandselement ausgestaltet ist, wenigstens einen Gegenstand von dem Einspeisungsstrom in Eingriff zu nehmen und die Gegenstände durch eine Arbeitsreichweite der Vorrichtung zu befördern. Dabei sind sowohl die führenden als auch die nachlaufenden Abstandselemente für eine Bewegung entlang desselben vorbestimmten Weges geeignet. Ferner sind Verstellmittel vorgesehen, um die Vorrichtung zwischen einem ersten Modus, in dem jedes Abstandselement sukzessive einem ersten Weg folgt, um eine Gegenstandsgruppe in Eingriff zu nehmen, und einem zweiten Modus zu verstellen, in dem das nachlaufende Abstandselement dem ersten Weg folgt und das führende Abstandselement von dem ersten Weg überführt wird, um einem zweiten vorbestimmten Weg zu folgen, der damit verbunden ist, bevor dieses wieder zum ersten Weg geführt wird, wodurch führende und nachlaufende Abstandselemente gleichzeitig eine Gegenstandsgruppe in Eingriff nehmen. Ähnliche Vorrichtungen sind auch aus der US 2,910,200 sowie der US 3,731,715 bekannt.

Die Druckschrift EP 1 123 886 A1 offenbart eine Vorrichtung umfassend eine stationäre, geschlossene Führung, auf welcher mehrere Förderelemente zur Aufnahme von Produkten beweglich geführt sind. An der Führung ist eine Vielzahl von hintereinander angeordneten, separat angesteuerten Spulen angeordnet. Jedes Förderelement hat mindestens einen Permanentmagneten, der in Kombination mit den Spulen einen Linearmotor bildet.

Als nachteilig bei den bekannten Vorrichtungen, insbesondere der EP 2 500 296 A1 kann angesehen werden, dass die Einteilelemente an den anstehenden Staudruck angepasst dimensioniert sein müssen. Zudem ist eine äußerst komplizierte Mechanik und ein umfangreicher Steueraufwand erforderlich, womit erst ein Auftauchen der Einteilelemente ermöglicht wird.

Aufgabe der Erfindung ist es, eine Vorrichtung der eingangs genannten Art anzugeben, bei dem die Abteilsegmente mit einfachen Mitteln von unterhalb der Transportebene in diese geführt werden können, so dass die Abteilsegmente auch entsprechend kostengünstiger dimensioniert werden können.

Zur Lösung dieser Aufgabe ist eine Vorrichtung entsprechend dem Patentanspruch 1 vorgesehen.

Weiterbildungen, Vorteile und Anwendungsmöglichkeiten der Erfindung ergeben sich auch aus der nachfolgenden Beschreibung von Ausführungsbeispielen. Dabei sind alle beschriebenen Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Erfindungsgemäß sind die Abteilsegmente jeweils an einem Bewegungselement gehalten, welche Bewegungselemente an einem Lineartransporteur umlaufen, wobei das Abteilsegment ein Eingreifelement und ein mit diesem in Verbindung stehendes Führungselement aufweist, welches Führungselement an einer Steuerkurve entlang geführt wird, und wobei das jeweilige Abteilsegment an der Steuerkurve so entlang geführt wird, dass das Abteilsegment an einem horizontal ausgerichteten Bahnabschnitt des Lineartransporteurs in die Transportebene eingreifend eingeführt wird.

Mit der Erfindung wird erreicht, dass die Abteilsegmente in einfachster Weise von unterhalb der Transportebene in diese eingeführt werden können. Dazu ist lediglich die Steuerkurve erforderlich an der die Abteilsegmente entlanggeführt werden. Insofern ist eine rein mechanische Lösung verwirklicht, welche ohne aufwändigen elektrotechnischen Steueraufwand oder umfangreichen mechanischen Lenkhebeln, zum Beispiel in der Ausgestaltung als Parallelogramm Mechanismus auskommt. Weiterhin ist gegenüber dem vorbekannten Stand der Technik eine geringere Anzahl an Abteilsegmenten erforderlich.

Idealerweise wird der Lineartransporteur als elektromagnetischer Direktabtrieb ausgeführt, auf welchem die Bewegungselemente in Form von Schlitten oder als so genannte "Mover" umlaufen und voneinander unabhängig gesteuert und geregelt verfahrbar sind. Idealerweise wird auf oder an je einem Bewegungselement ein oder mehrere Eingreif- und/oder Führungselemente angeordnet.

Günstig im Sinne der Erfindung ist, wenn die Steuerkurve einen ansteigenden Anfangsabschnitt, einen bezogen auf die Transportebene horizontal verlaufenden Mittelabschnitt, und einen z.B. verrundet ausgeführten Endabschnitt aufweist. So kann das Abteilsegment entlang des ansteigenden Anfangsabschnittes stetig Weiterbildungen, Vorteile und Anwendungsmöglichkeiten der Erfindung ergeben sich auch aus der nachfolgenden Beschreibung von Ausführungsbeispielen. Dabei sind alle beschriebenen Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Erfindungsgemäß laufen die Bewegungselemente an einem Lineartransporteur getriebelos direkt ansteuerbar um, wobei der Lineartransporteur als ein elektromagnetischer Direktantrieb in der Art einer elektromagnetischen Bahn ausgeführt ist und eine geschlossene Bewegungsbahn aufweist, wobei die jeweils gewünschte Geschwindigkeit des jeweiligen Bewegungselements individuell ansteuerbar ist, wozu eine Schnittstelle der Bewegungsbahn mit einer Steuereinheit verbindbar ist, und wobei die Steuerkurve motorisch angetrieben stufenlos horizontal und vertikal verfahrbar ist.

Mit der Erfindung wird erreicht, dass die Abteilsegmente in einfachster Weise von unterhalb der Transportebene in diese eingeführt werden können. Dazu ist lediglich die Steuerkurve erforderlich an der die Abteilsegmente entlanggeführt werden. Insofern ist eine rein mechanische Lösung verwirklicht, welche ohne aufwändigen elektrotechnischen Steueraufwand oder umfangreichen mechanischen Lenkhebeln, zum Beispiel in der Ausgestaltung als Parallelogramm Mechanismus auskommt. Weiterhin ist gegenüber dem vorbekannten Stand der Technik eine geringere Anzahl an Abteilsegmenten erforderlich.

Erfindungsgemäß wird der Lineartransporteur als elektromagnetischer Direktabtrieb ausgeführt, auf welchem die Bewegungselemente bevorzugt in Form von Schlitten oder als so genannte "Mover" umlaufen und erfindungsgemäß voneinander unabhängig gesteuert und geregelt verfahrbar sind. Idealerweise wird auf oder an je einem Bewegungselement ein oder mehrere Eingreif- und/oder Führungselemente angeordnet.

Günstig im Sinne der Erfindung ist, wenn die Steuerkurve einen ansteigenden Anfangsabschnitt, einen bezogen auf die Transportebene horizontal verlaufenden Mittelabschnitt, und einen z.B. verrundet ausgeführten Endabschnitt aufweist. So kann das Abteilsegment entlang des ansteigenden Anfangsabschnittes stetig von unterhalb der Transportebene in Richtung zu dieser geführt werden. Zweckmäßig ist dabei, wenn der ansteigende Anfangsabschnitt mit einem konstanten Neigungsbetrag ausgeführt ist. An dem Anfangsabschnitt schließt sich vorteilhaft direkt der Mittelabschnitt an. Entlang des Mittelabschnittes wird das Abteilsegment mit seinem Eingreifelement in die Transportebene eingreifend belassen geführt. Erreicht das Abteilsegment den verrundet ausgeführten Endabschnitt, wird das Abteilsegment, insbesondere dessen Eingreifbolzen unter die Transportebene zurückgeführt.

In günstiger Ausgestaltung ist der verrundet ausgeführte Endabschnitt in seiner axialen Erstreckung kleiner als der Mittelabschnitt, aber auch kleiner als der Anfangsabschnitt ausgeführt. Der Endabschnitt kann lediglich beispielhaft in der Art eines Viertelkreisausschnittes ausgeführt sein. In weiter möglicher Ausgestaltung kann vorgesehen sein, dass der Endabschnitt analog zum Anfangsabschnitt stetig abfallend ausgeführt ist, wobei sowohl der Anfangsabschnitt aber auch der Endabschnitt jeweils dieselbe axiale Erstreckung aufweisen kann.

Der Mittelabschnitt kann in möglicher Ausgestaltung starr, also mit fester, vorgegebener axialer Erstreckung ausgeführt sein. In weiter möglicher Ausgestaltung kann der Mittelabschnitt zueinander verschiebbare Elemente aufweisen, so dass die axiale Erstreckung des Mittelabschnittes und damit der gesamten Steuerkurve zwischen einer Maximalerstreckung und einer Minimalerstreckung stufenlos einstellbar ist. Dazu könnte der Mittelabschnitt teleskopartig verstellbar ausgeführt sein, wobei natürlich die betreffliche Steuerseite parallel, also horizontal eben zur Transportebene ausgeführt sein sollte. Möglich ist, dass dabei ein Element starr ist, wobei das andere verschiebbar ist. Denkbar sind natürlich auch zwei verschiebbar gelagerte Elemente.

In günstiger Ausgestaltung ist der Mittelabschnitt so bemessen dass dieser eine axiale Erstreckung parallel zur Transportebene aufweist, welche auf jeden Fall größer als das vorgesehene zukünftige Gebinde ist.

Das Abteilsegment weist wie bereits erwähnt das Eingreifelement und das Führungselement auf. Das Führungselement ist in günstiger Ausgestaltung als Rolle ausgeführt, so dass das Abteilsegment mittels der Rolle entlang der Steuerkurve abrollen kann.

Die Rolle, also das Führungselement kann dabei auf der Steuerkurve abrollen, oder von zwei Flanschen der Steuerkurve umschlossen sein, um nur beispielhafte Zwangsführungen zu nennen.

Zielführend ist, wenn das Abteilsegment, oder zumindest Teilkomponenten von diesem relativ beweglich zu dem tragenden Bewegungselement sind. Günstig ist wenn das Abteilsegment ein Schubgelenk aufweist, welches an dem Bewegungselement gelagert ist. Das Schubgelenk trägt ein relativ dazu bewegliches Tragelement. Das Tragelement kann bevorzugt als Winkelelement ausgeführt sein, welches einen zur Transportebene parallel verlaufender Bolzenschenkel und einen senkrecht dazu verlaufenden Rollenschenkel aufweist. An dem Bolzenschenkel ist das Eingreifelement in der Ausgestaltung als Eingreifbolzen angeordnet. An dem Rollenschenkel ist das Führungselement in der Ausgestaltung als Rolle angeordnet.

Wird das Abteilsegment an dem Bewegungselement gehalten nun entlang der Steuerkurve geführt, wird das Eingreifelement entsprechend der Steigung des Anfangsabschnittes in Richtung zur Transportebene geführt, bzw. greift in diese ein. Entlang des Mittelabschnittes verbleibt das Eingreifelement in dieser Eingriffsposition und verlässt diese entlang des Endabschnittes.

In möglicher Ausgestaltung können die Abteilsegmente einen Kraftspeicher aufweisen, so dass das Tragelement kraftspeicherbedingt in seine unterste Position gehalten wird. Wird das Abteilsegment entlang der Steuerkurve geführt, bewirkt diese zwangsläufig eine Auslenkung des Tragelementes entgegen der Kraftspeicherkraft, wobei das Tragelement in der Zwangslage gehalten wird, bis der Mittelabschnitt verlassen ist. Als Kraftspeicher kann ein Federelement, z.B. als Schraubenfeder Verwendung finden.

Grundsätzlich kann das Abteilsegment also mit der Erfindung mit einfachsten mechanischen Mitteln in die Transportebene eingreifend geführt werden, um die zukünftigen Gebinde abzuteilen. Zielführend ist auch, wenn die Abteilsegmente das zukünftige Gebinde in Transportrichtung gesehen beschleunigen, und so von dem sich aufstauenden Behälterpulk wegschieben.

Der Lineartransporteur weist dazu bevorzugt eine geschlossene Bewegungsbahn auf, an welcher die einzelnen Bewegungselemente angeordnet sind, welche umlaufen. Die Bewegungselemente sind individuell ansteuerbar, so dass jedes Bewegungselement eine jeweilige Geschwindigkeit haben kann. An einem Hintrumm der Bewegungsbahn, ist die Geschwindigkeit der dort befindlichen Bewegungselemente zweckmäßig ungleich zueinander, obwohl alle Bewegungselemente entlang des Hintrumms an dem jeweils gleichen Ort des Hintrumms die gleiche Geschwindigkeit haben. Der Hintrumm der Bewegungsbahn ist dabei der Steuerkurve so zugeordnet, dass das Abteilsegment entlang der Steuerkurve führbar ist. Entlang des Rücktrumms können die Bewegungselemente wiederum eine andere Geschwindigkeit haben. Dies ist vorteilhaft, das so eine sehr geringe Anzahl an Bewegungselementen vorgesehen werden kann, da die sich entlang des Rücktrumms bewegenden Bewegungselemente die sich entlang des Hintrumms bewegenden Bewegungselemente überholen können. Die Bewegungsbahn kann selbstverständlich eine Schleuse zum Ausschleusen nicht benötigter oder zu überprüfender Bewegungselemente aufweisen. Durch die Schleuse kann selbstverständlich auch zum Einschleusen genutzt werden.

Der Lineartransporteur ist in der Art einer elektromagnetischen Bahn ausgeführt, wobei die Bewegungselemente getriebelos an dieser direkt ansteuerbar umlaufen, wobei die jeweils gewünschte Geschwindigkeit des jeweiligen Bewegungselementes individuell ansteuerbar ist. Dazu ist eine Schnittstelle der Bewegungsbahn mit einer Steuereinheit verbindbar. Der Lineartransporteur kann demnach ein elektromagnetischer Direktantrieb sein.

Zwischen dem Hintrumm und dem Rücktrumm sind bevorzugt Kurvenbereiche ausgeführt. Die Bewegungsbahn ist in ihrem Verlauf individuell erstellbar, was bedeutet, dass die Bewegungsbahn nicht nur in ihrem Verlauf an die Erfordernisse der Vorrichtung zum Erstellen der Gebinde angepasst werden kann.

Gegenüber den bekannten Ansätzen aus dem Stand der Technik findet das Auftauchen der Abteilsegmente gemäß der Erfindung erst auf der horizontalen Strecke der Bewegungsbahn des Lineartransporteurs, also direkt entlang der Steuerkurve statt. Ein Auftauchen im Umlenkbereich des Lineartransporteurs ist vermieden. Entgegen der derzeitig notwendigen Geschwindigkeitsanpassung beim Auftauchen des Abteilsegmentes auf der Kreisbahn über eine Kreisfunktion (Sinus- oder Kosinus-Funktion) entfällt dieser komplizierte Ansatz bei der Erfindung.

Bei der Erfindung verfährt das Bewegungselement beim Durchdringen des Abteilsegmentes der Transportebene mit der Produktlängengeschwindigkeit bis zum vollständigen Auftauchen des Eingreifbolzens und dem Erreichen der abzuteilenden Produktlänge. Im Anschluss daran wird das Bewegungselement derart beschleunigt, dass eine Trennung zur abgeteilten Produktgruppe entsteht, gleichzeitig aber die davor laufende Produktgruppe durch das Abteilsegment, also durch den Eingreifbolzen nicht berührt wird. Das folgende Abteilsegment muss nun so mit einer entsprechenden Geschwindigkeit verfahren werden, dass beim Durchdringen des Abteilsegmentes durch die Transportebene wieder die entsprechende Lücke in der Produktgruppe vorgefunden wird.

Bei einer Variante mit kleineren Produktlängen kann es zur Reduktion absoluter Bahngeschwindigkeiten vonnöten sein, zusätzliche Bewegungselemente auf der Bahn im Einsatz zu haben. Weiterhin kann vorgesehen werden, dass mehrere Eingreifelemente auf einem Querträger auf oder an einem Bewegungselement angeordnet sind, wobei die Eingreifelemente beim Anheben in den Produkt- oder Behälterstrom von benachbarten Reihen oder Gassen eintaucht und diese nachfolgende zeitgleich abgeteilt und/oder verdichtet werden können, wobei dann nur das eine Bewegungselement verfahren werden muss.

Die Verwendung eines Bewegungselementes pro Abteilsegment erlaubt den Einsatz eines solchen Systems auch bei kleinen Produktlängen. Im Vergleich dazu ist bei der Verwendung von zwei Bewegungselementen in Verbindung mit dem Parallelogramm Mechanismus die kleinste abzuteilende Produktlänge deutlich größer.

Die Erfindung wird im Folgenden anhand der in den Figuren gezeigten Ausführungsbeispiele näher erläutert. Es zeigen:
- Fig. 1: eine Vorrichtung zum Abteilen von Behältern in prinzipieller Ansicht,
- Fig. 2: die Vorrichtung aus Figur 1, wobei ein Ablauf im Vergleich zu Figur 1 erkennbar ist,
- Fig. 3: die Vorrichtung aus Figur 1 in einer Variante für kleinere Gebinde als in Figur 1,
- Fig. 4: eine Steuerkurve als Einzelheit in starrer Ausgestaltung,
- Fig. 5: eine Steuerkurve als Einzelheit in variabler Ausgestaltung,
- Fig. 6: eine Steuerkurve als Einzelheit in weiterer Ausgestaltung,
- Fig. 7: ein Abteilsegment als Einzelheit in prinzipieller Ansicht,
- Fig. 8: ein Abteilsegment mit Kraftspeicher, und
- Fig. 9: ein Abteilsegment mit umschlossener Führungsrolle.

In den unterschiedlichen Figuren sind gleiche Teile stets mit denselben Bezugszeichen versehen, weswegen diese in der Regel auch nur einmal beschrieben werden.

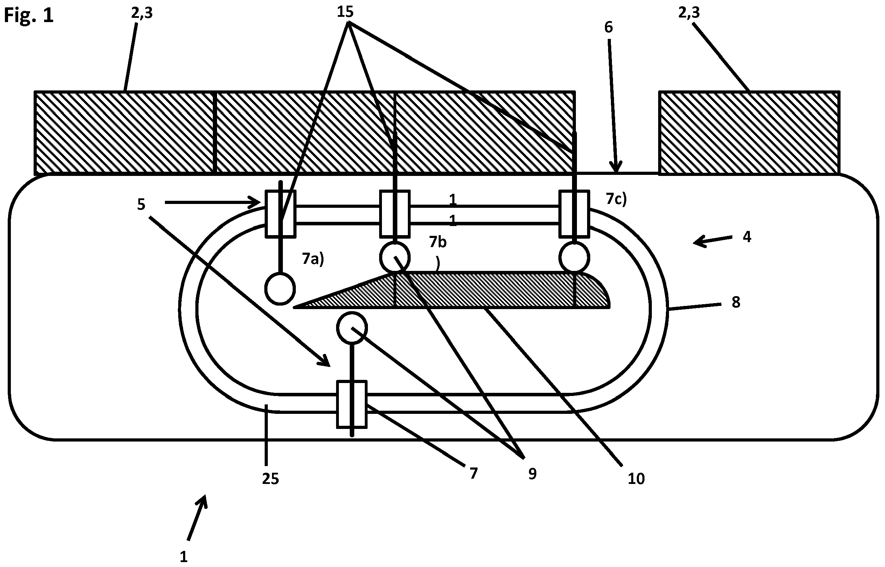

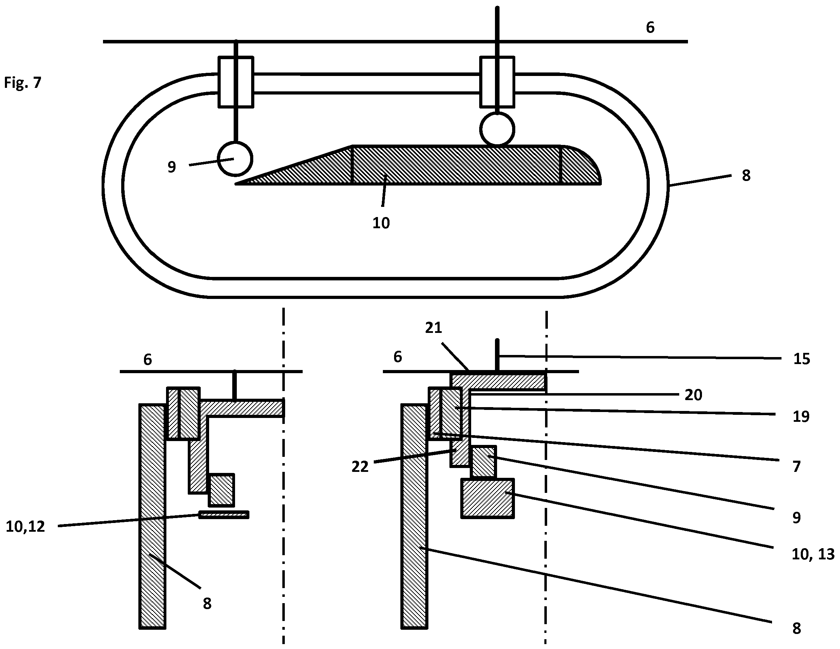

Figur 1 zeigt eine Vorrichtung 1 zum Abteilen von Verpackungseinheiten 2 in einer Verpackungsmaschine zur Herstellung von Produktgruppen 3 oder Gebinden 3, wobei aus einem breitem Behälterstrom mittels Gassenteilung Behälter in mehrere einspurige Behälterströme umgewandelt werden, und mit mindestens einer Abteil und/oder Verdichtereinheit 4 zum Abteilen und Verdichten einer vorbestimmten Anzahl an Behältern, verdichtete oder formierte Behältergruppen bzw. Teilgebinde gebildet und nachfolgend jeweils zu einem späteren Gebinde 3 zusammengefasst werden, wobei Abteilsegmente 5 von unterhalb einer Transportebene 6 temporär in diese eingreifen und anschließend wieder unter die Transportebene 6 zurückgeführt werden. Erfindungsgemäß sind die Abteilsegmente 5 jeweils an einem Bewegungselement 7 gehalten, welche Bewegungselemente 7 an einem Lineartransporteur 8 umlaufen, wobei das Abteilsegment 5 ein Eingreifelement 15 und ein mit diesem in Verbindung stehendes Führungselement 9 (Fig. 7) aufweist, welches Führungselement 9 an einer Steuerkurve 10 entlang geführt wird, und wobei das jeweilige Abteilsegment 5 an der Steuerkurve 10 so entlang geführt wird, dass das Abteilsegment 5 an einem horizontal ausgerichteten Bahnabschnitt 11 des Lineartransporteurs 8 in die Transportebene 6 eingreifend eingeführt wird. Dabei ist zu beachten, dass die Eingreifelemente 15 im Idealfall derart dimensioniert bzw. auf dem Abteilsegment 5 angeordnet und gelagert sind, dass diese senkrecht in den Produkt- oder Behälterstrom eintauchen und ein Einschwenken vermieden wird. Abhängig von den Abständen der Produkte/Behälter nach der Beabstandung ist eine analoge Bewegung auch beim der Rückbewegung der Eingreifelemente 15 vorteilhaft.

Gemäß dem Ausführungsbeispiel nach Figur 1 sowie den Figuren 4 und 5 weist die Steuerkurve 10 einen ansteigenden Anfangsabschnitt 12, einen bezogen auf die Transportebene 6 horizontal verlaufenden Mittelabschnitt 13, und einen verrundet ausgeführten Endabschnitt 14 auf. So kann das Abteilsegment 5 entlang des ansteigenden Anfangsabschnittes 12 stetig von unterhalb der Transportebene 6 in Richtung zu dieser geführt werden. Wie erkennbar ist der ansteigende Anfangsabschnitt 12 mit einem konstanten Neigungsbetrag ausgeführt. An dem Anfangsabschnitt 12 schließt sich vorteilhaft direkt der ebene Mittelabschnitt 13 an. Entlang des Mittelabschnittes 13 wird das Abteilsegment 5 mit seinem Eingreifelement 15 in die Transportebene 6 eingreifend belassen geführt. Erreicht das Abteilsegment 5 den in den Figuren 1, 4 und 5 beispielhaft verrundet ausgeführten Endabschnitt 14, wird das Abteilsegment 5, insbesondere dessen Eingreifelement 15 unter die Transportebene 6 zurückgeführt. Das Eingreifelement 15 wird im Folgenden auch als Eingreifbolzen 15 bezeichnet.

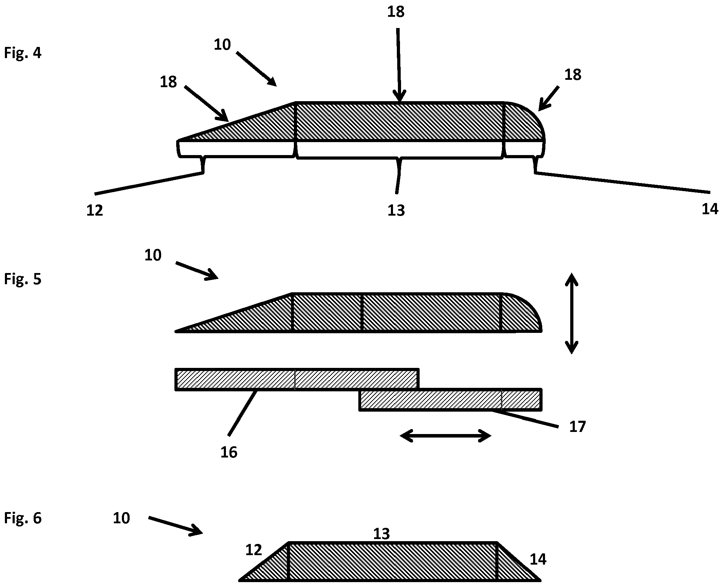

Bei den in den Figuren 1, 4 und 5 gezeigten Ausgestaltung ist der verrundet ausgeführte Endabschnitt 14 in seiner axialen Erstreckung kleiner als der Mittelabschnitt 13, aber auch kleiner als der Anfangsabschnitt 12 ausgeführt. Der Endabschnitt 14 kann lediglich beispielhaft in der Art eines Viertelkreisausschnittes ausgeführt sein. In weiter möglicher Ausgestaltung kann vorgesehen sein, dass der Endabschnitt 14 analog zum Anfangsabschnitt 12 stetig abfallend ausgeführt ist, wobei sowohl der Anfangsabschnitt 12 aber auch der Endabschnitt 14 dieselbe axiale Erstreckung aufweisen können, wie beispielhaft in Figur 6 dargestellt ist.

Der Mittelabschnitt 13 kann in möglicher Ausgestaltung starr, also mit fester, vorgegebener axialer Erstreckung ausgeführt sein. In weiter möglicher Ausgestaltung kann der Mittelabschnitt 13 zueinander verschiebbare Elemente 16,17 aufweisen, wie beispielhaft in Figur 5 erkennbar ist, so dass die axiale Erstreckung des Mittelabschnittes 14 und damit der gesamten Steuerkurve 10 zwischen einer Maximalerstreckung und einer Minimalerstreckung stufenlos einstellbar und ggf. motorisch angetrieben ist. Dazu könnte der Mittelabschnitt 13 teleskopartig verstellbar ausgeführt sein, wobei natürlich die betreffliche Steuerseite 18 des Mittelabschnittes (Figur 4) parallel, also horizontal eben zur Transportebene 6 ausgeführt ist. Entlang dem Anfangsabschnitt 12 und entlang dem Endabschnitt 14 ist die Steuerseite 18 natürlich entsprechend an deren Verlauf angepasst.

Das Abteilsegment 5 weist wie bereits erwähnt das Eingreifelement 15 und das Führungselement 9 auf. Das Führungselement 9 ist in günstiger Ausgestaltung als Rolle 9 ausgeführt, so dass das Abteilsegment 5 mittels der Rolle 9 entlang der Steuerkurve 10 abrollen kann.

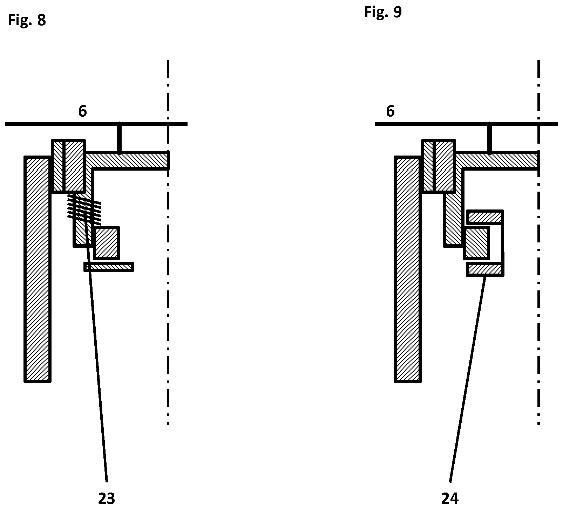

Die Rolle 9, also das Führungselement 9 kann dabei auf der Steuerkurve 10 abrollen, wie prinzipiell in Figur 8 dargestellt, oder von zwei Flanschen 24 der Steuerkurve 10 umschlossen sein, wie beispielhaft in Figur 9 gezeigt, um nur beispielhafte Zwangsführungen zu nennen. Weiterhin deuten die Doppelpfeile die Verfahrbarkeit der Steuerkurve an, die man insbesondere für alle Ausführungsbeispiele für eine horizontale, also formatteilabhängige Festlegung der Bewegung des Eingreifelementes 15 vorsehen werden sollte. Gemäß der Erfindung ist vorgesehen, auch die Eingreifhöhe der Eingreifelemente zu variieren, um z.B. nach dem Auftauchen an einem bestimmten Behälterbereich in Anlage zu gelangen. Dies erfolgt motorisch.

Figur 7 zeigt beispielhaft zwei verschiedene Stationen des Abteilsegmentes 5 entlang der Steuerkurve 10. Bei dem in dem linken Bereich der Zeichnungsebene erkennbaren Zustand hat das Abteilsegment 5 die Steuerkurve 10, also den ansteigenden Anfangsabschnitt 12 erreicht. Bei dem in dem rechten Bereich der Zeichnungsebene erkennbaren Zustand rollt das Abteilsegment 5 entlang der Steuerkurve 10, also entlang des Mittelabschnittes 13 in Richtung zum Endabschnitt 14. Wie in Figur 7 erkennbar, sind Teilkomponenten des Abteilsegmentes 5 folglich relativ beweglich zu dem tragenden Bewegungselement 7. Beispielhaft weist das Abteilsegment 5 ein Schubgelenk 19 auf, welches an dem Bewegungselement 7 gelagert ist. Das Schubgelenk 19 trägt ein relativ zu diesem bewegliches Tragelement 20. Das Tragelement 20 kann bevorzugt als Winkelelement ausgeführt sein, welches einen zur Transportebene 6 parallel verlaufenden Bolzenschenkel 21 und einen senkrecht dazu verlaufenden Rollenschenkel 22 aufweist. An dem Bolzenschenkel 21 ist das Eingreifelement 15 in der Ausgestaltung als Bolzen angeordnet. An dem
Rollenschenkel 22 ist das Führungselement 9 in der Ausgestaltung als Rolle 9 angeordnet. Der Rollenschenkel 22 steht zudem mit dem Schubgelenk in Verbindung.

Wie der Figur 8 entnehmbar ist, können die Abteilsegmente 5 einen Kraftspeicher 23 aufweisen, so dass das Tragelement 20 kraftspeicherbedingt in seiner untersten Position gehalten wird. Wird das Abteilsegment 5 entlang der Steuerkurve 10 geführt, bewirkt diese zwangsläufig eine Auslenkung des Tragelementes 20 entgegen der Kraftspeicherkraft, wobei das Tragelement 20 in der Zwangslage gehalten wird, bis der Mittelabschnitt 14 verlassen ist. Als Kraftspeicher 23 kann ein Federelement, z.B. als Schraubenfeder Verwendung finden, wie in Figur 8 erkennbar.

Der Lineartransporteur 8 weist eine geschlossene Bewegungsbahn 23 auf, an welcher die einzelnen Bewegungselemente 7 angeordnet sind, welche umlaufen. Die Bewegungselemente 7 sind individuell ansteuerbar, so dass jedes Bewegungselement 7 eine jeweilige Geschwindigkeit haben kann.

Der Lineartransporteur 8 ist in der Art einer elektromagnetischen Bahn ausgeführt, wobei die Bewegungselemente 7 getriebelos an dieser direkt ansteuerbar umlaufen, wobei die jeweils gewünschte Geschwindigkeit des jeweiligen Bewegungselementes 7 individuell ansteuerbar ist. Dazu ist eine Schnittstelle der Bewegungsbahn 25 mit einer Steuereinheit verbindbar. Der Lineartransporteur 8 kann demnach ein elektromagnetischer Direktantrieb sein.

Wie in Figur 1 erkennbar findet das Auftauchen der Abteilsegmente 5, also das Auftauchen der Eingreifelemente 15 gemäß der Erfindung erst auf der horizontalen Strecke der Bewegungsbahn 25, also entlang der Steuerkurve 10 statt.

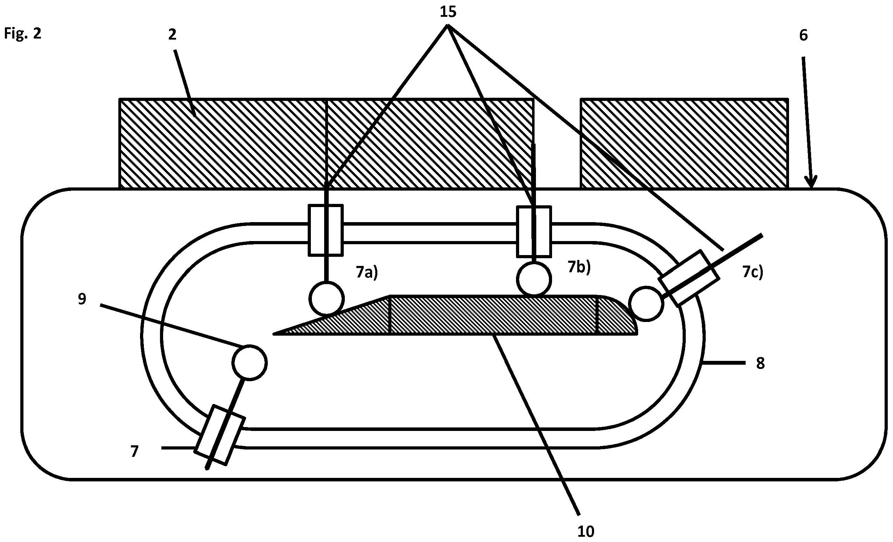

Bei der Erfindung verfährt das Bewegungselement 7b in Figur 1 und 2 beim Durchdringen des Abteilsegmentes 5 der Transportebene 6 mit der Produktlängengeschwindigkeit bis zum vollständigen Auftauchen des Eingreifbolzens 15 und dem Erreichen der abzuteilenden Produktlänge. Im Anschluss daran wird das Bewegungselement 7c in Figur 1 und 2 derart beschleunigt, dass eine Trennung zur abgeteilten Produktgruppe entsteht, gleichzeitig aber die davor laufende Produktgruppe 3 durch das Abteilsegment 5, also durch den Eingreifbolzen 15 nicht berührt wird. Das folgende Bewegungselement 7a in Figur 1 und 2 mit seinem Abteilsegment 5 muss nun so mit einer entsprechenden Geschwindigkeit verfahren werden, dass beim Durchdringen des Abteilsegmentes 5 durch die Transportebene 6 wieder die entsprechende Lücke in der Produktgruppe 3 vorgefunden wird.

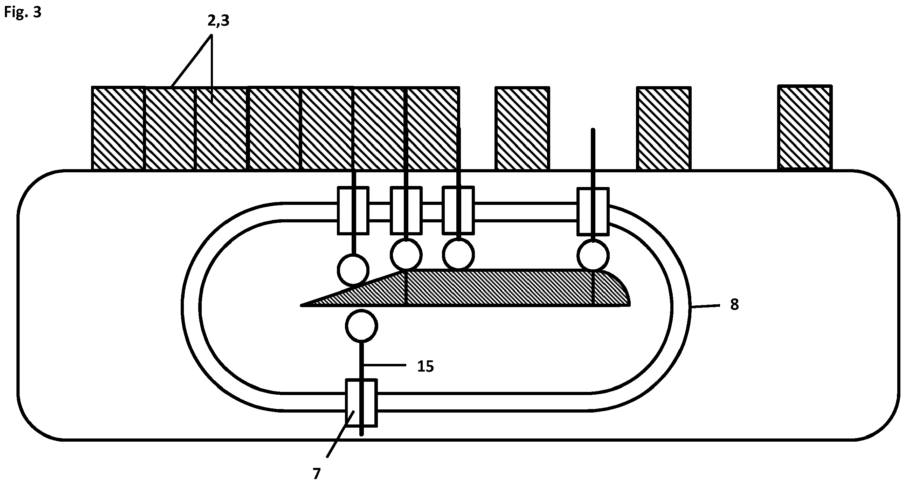

Bei einer Variante mit kleineren Produktlängen (Figur 3) kann es zur Reduktion absoluter Bahngeschwindigkeiten vonnöten sein, zusätzliche Bewegungselemente 7 auf der Bahn im Einsatz zu haben.

Für alle Ausführungsformen ist eine oder mehrere Steuer- und Regeleinheiten vorgesehen (nicht dargestellt), ggf. im Zusammenwirken mit optischen oder sonstigen Sensoreinheiten, um die Bewegung und den Auftauchort-/bereich der Eingriffselemente (15) optimal und dynamisch auf die Transportbewegung der Produkteinheiten, Behälter, etc. abzustimmen.

### Bezugszeichenliste

- 1: Vorrichtung
- 2: Verpackungseinheiten
- 3: Produktgruppen/Gebinde
- 4: Abteileinheit
- 5: Abteilsegmente
- 6: Transportebene
- 7: Bewegungselemente
- 8: Lineartransporteur
- 9: Führungselement/Rolle
- 10: Steuerkurve
- 11: horizontaler Bahnabschnitt
- 12: Anfangsabschnitt von 10
- 13: Mittelabschnitt von 10
- 14: Endabschnitt von 10
- 15: Eingreifelement/Eingreifbolzen
- 16: verschiebbares Element von 13
- 17: verschiebbares Element von 13
- 18: Steuerseite
- 19: Schubgelenk
- 20: Tragelement
- 21: Bolzenschenkel
- 22: Rollenschenkel
- 23: Kraftspeicher
- 24: Flansche
- 25: Bewegungsbahn

## Patentansprüche

1. Vorrichtung (1) zum Abteilen von Verpackungseinheiten (2) in einer Verpackungsmaschine zur Herstellung von Produktgruppen (3) oder Gebinden (3), wobei die Vorrichtung (1) mindestens eine Abteil- und Verdichtereinheit (4) zum Abteilen und Verdichten einer vorbestimmten Anzahl an Behältern aufweist und wobei mit der mindestens einen Abteil- und Verdichtereinheit (4) verdichtete Behältergruppen gebildet werden,
wobei die Vorrichtung (1) zum Abteilen von Verpackungseinheiten (2) Abteilsegmente (5) umfasst, die von unterhalb einer Transportebene (6) temporär in diese eingreifen und anschließend wieder unter die Transportebene (6) zurückgeführt werden,
wobei die Abteilsegmente (5) jeweils an einem Bewegungselement (7) gehalten sind und
wobei das Abteilsegment (5) ein Eingreifelement (15) und ein mit diesem in Verbindung stehendes Führungselement (9) aufweist,
welches Führungselement (9) an einer Steuerkurve (10) entlang geführt wird, mittels welcher der Ort oder der Bereich der vertikalen Bewegung des Eingreifelementes (15) gesteuert werden kann,
und wobei das Eingreifelement (15) auf oder an dem Abteilelement (5) gelagert und/oder geführt ist, wobei die Bewegungselemente (7) an einem Lineartransporteur (8) getriebelos direkt ansteuerbar umlaufen,
wobei der Lineartransporteur (8) als ein elektromagnetischer Direktantrieb in der Art einer elektromagnetischen Bahn ausgeführt ist und eine geschlossene Bewegungsbahn (25) aufweist, wobei die jeweils gewünschte Geschwindigkeit des jeweiligen Bewegungselements (7) individuell ansteuerbar ist, wozu eine Schnittstelle der Bewegungsbahn (25) mit einer Steuereinheit verbindbar ist, und
wobei die Steuerkurve (10) motorisch angetrieben stufenlos horizontal und vertikal verfahrbar ist.

2. Vorrichtung nach Anspruch 1, **dadurch gekennzeichnet, dass** der Lineartransporteur (8) als elektromagnetischer Direktabtrieb ausgeführt ist, auf welchem die Bewegungselemente (7) voneinander unabhängig gesteuert und geregelt verfahrbar sind.

3. Vorrichtung nach Anspruch 2, **dadurch gekennzeichnet, dass** in Transportrichtung gesehen einen ansteigenden Anfangsabschnitt (12), einen bezogen auf die Transportebene (6) horizontal verlaufenden Mittelabschnitt (13), und einen verrundet ausgeführten Endabschnitt (14) aufweist, oder dass die Steuerkurve (10) in Transportrichtung gesehen einen ansteigenden Anfangsabschnitt (12), einen bezogen auf die Transportebene (6) horizontal verlaufenden Mittelabschnitt (13), und einen analog zum Anfangsabschnitt stetig geneigt fallenden Endabschnitt (14) aufweist.

4. Vorrichtung nach Anspruch 2 oder 3, **dadurch gekennzeichnet, dass** der Endabschnitt (14) in einer axialen Erstreckung kleiner ausgeführt ist als der Mittelabschnitt (13) und als der Anfangsabschnitt (12) ausgeführt ist, oder dass der Endabschnitt (14) und der Anfangsabschnitt (12) eine gleiche axiale Erstreckung aufweisen, aber jeweils kürzer als der Mittelabschnitt (13) sind.

5. Vorrichtung nach einem der vorhergehenden Ansprüche, **dadurch gekennzeichnet, dass** der Mittelabschnitt (13) zueinander verschiebbare Elemente (16, 17) aufweist, so dass die axiale Erstreckung des Mittelabschnitts (13) und damit der gesamten Steuerkurve (10) zwischen einer Maximalerstreckung und einer Minimalerstreckung stufenlos einstellbar ist, wobei bevorzugt der Mittelabschnitt (13) aus zwei verschiebbar gelagerten Elementen (16, 17) gebildet ist.

6. Vorrichtung nach einem der vorhergehenden Ansprüche, **dadurch gekennzeichnet, dass** das Führungselement (9) des Abteilsegmentes (5) als Rolle ausgeführt ist.

7. Vorrichtung nach einem der vorhergehenden Ansprüche, **dadurch gekennzeichnet, dass** das Abteilsegment (5) ein Schubgelenk (19) aufweist, welches ein Tragelement (20) trägt, das einen parallel zur Transportebene angeordneten Bolzenschenkel (21) und einen senkrecht dazu angeordneten Rollenschenkel (22) aufweist.

8. Vorrichtung nach Anspruch 7, **dadurch gekennzeichnet, dass** an dem Bolzenschenkel (21) der Eingreifbolzen (15) angeordnet ist, und dass an dem Rollenschenkel (22) das Führungselement (9) angeordnet ist.

9. Vorrichtung nach einem der vorhergehenden Ansprüche, **dadurch gekennzeichnet, dass** die Abteilsegmente (5) ein Federelement (23) aufweisen, so dass das Tragelement (20) kraftspeicherbedingt in seiner untersten Position hält.

## Claims

1. Device (1) for dividing off packaging units (2) in a packaging machine for producing product groups (3) or packages (3), wherein the device (1) comprises at least one dividing and/or compacting unit (4) for dividing off and compacting a predetermined number of containers, and wherein, with the at least one dividing and compacting unit (4), compacted container groups are formed,
wherein the device (1) for dividing off packaging units (2) comprises dividing segments (5), which from underneath a transport plane (6) engage temporarily in the latter and are then guided back under the transport plane (6),
wherein the dividing segments (5) are in each case held on a movement element (7), and
wherein the dividing segment (5) comprises an engaging element (15) and a guide element (9) which is connected thereto,
said guide element (9) being guided along a control curve (10), by means of which the location or the range of the vertical movement of the engaging element (15) can be controlled,
and wherein the engaging element (15) is mounted and/or guided on or at the dividing element (5),
wherein
the movement elements (7) circulate on a linear transporter (8) without a gear system and can be directly actuated and controlled,
wherein the linear transporter (8) is configured as an electromagnetic direct drive in the form of an electromagnetic track and exhibit a closed movement path (25), wherein the desired speed of the respective movement element (7) can be individually actuated and controlled, for which purpose an interface of the movement path (25) can be connected to a control unit, and
wherein the control curve (10) is steplessly driven by a motor and can be displaced horizontally and vertically.

2. Device according to claim 1, **characterised in that** the linear transporter (8) is configured as an electromagnetic direct output drive, on which the movement elements (7) can be moved controlled and regulated independently of one another.

3. Device according to claim 2, **characterised in that**, seen in the direction of transport, it comprises a rising starting section (12), a middle section (13) running horizontally in relation to the transport plane (6), and an end section (14) configured as rounded, or that the control curve (10), seen in the direction of transport, comprises a rising starting section (12), a middle section (13) running horizontally in relation to the transport plane (6), and an end section (14), which, by analogy with the starting section, is inclined such as to fall constantly.

4. Device according to claim 2 or 3, **characterised in that** the end section (14) is
configured in an axial extension as smaller than the middle section (13) and than the starting section (12), or that the end section (14) and the starting section (12) exhibit an equal axial extension, but in each case are shorter than the middle section (13).

5. Device according to any one of the preceding claims, **characterised in that** the middle section (13) comprises elements (16, 17) which are displaceable in relation to one another, such that the axial extension of the middle section (13), and therefore of the entire control curve (10) can be steplessly adjusted between a maximum extension and a minimum extension, wherein the middle section (13) is preferably formed from two displaceably mounted elements (16, 17).

6. Device according to any one of the preceding claims, **characterised in that** the guide element (9) of the dividing segment (5) is configured as a roller.

7. Device according to any one of the preceding claims, **characterised in that** the dividing segment (5) comprises a sliding joint (19), which supports a carrier element (20), which in turn comprises a bolt limb (21) arranged parallel to the transport plane and a roller limb (22) arranged perpendicular thereto.

8. Device according to claim 7, **characterised in that** an engagement bolt (15) is arranged at the bolt limb (21), and that a guide element (9) is arranged at the roller limb (22).

9. Device according to any one of the preceding claims, **characterised in that** the dividing segments (5) comprise a spring element (23), such that the carrier element (20) is held in its lowermost position due to energy storage effects.

## Revendications

1. Dispositif (1) servant à trier des unités d'emballage (2) dans une machine d'emballage afin de fabriquer des groupes de produits (3) ou des colis (3), dans lequel le dispositif (1) présente au moins une unité de tri et de compactage (4) servant à trier et à compacter un nombre prédéfini de contenants et dans lequel des groupes de contenants compactés avec l'au moins une unité de tri et de compactage (4) sont formés,
dans lequel le dispositif (1) servant à trier des unités d'emballage (2) comprend des segments de tri (5), qui viennent en prise depuis le dessous d'un plan de transport (6) de manière temporaire avec ce dernier et qui sont ramenés immédiatement après sous le plan de transport (6),
dans lequel les segments de tri (5) sont maintenus respectivement au niveau d'un élément de déplacement (7), et
dans lequel le segment de tri (5) présente un élément de prise (15) et un élément de guidage (9) relié à ce dernier,
lequel élément de guidage (9) est guidé le long d'une came de commande (10), au moyen de laquelle le lieu ou la zone du déplacement vertical de l'élément de prise (15) peut être commandé(e),
et dans lequel l'élément de prise (15) est monté et/ou guidé sur ou au niveau de l'élément de tri (5),
dans lequel
les éléments de déplacement (7) circulent de manière à pouvoir être pilotés directement sans transmission au niveau d'un transporteur linéaire (8),
dans lequel le transporteur linéaire (8) est réalisé sous la forme d'un entraînement direct électromagnétique à la manière d'une voie électromagnétique et présente une voie de déplacement (25) fermée, dans lequel la vitesse respectivement souhaitée de l'élément de déplacement (7) respectif peut être pilotée de manière individuelle, une interface de la voie de déplacement (25) pouvant être reliée à cet effet à une unité de commande, et
dans lequel la came de commande (10) peut être déplacée de manière horizontale et verticale en continu par un entraînement à moteur.

2. Dispositif selon la revendication 1, **caractérisé en ce que** le transporteur linéaire (8) est réalisé sous la forme d'une sortie directe électromagnétique, sur laquelle les éléments de déplacement (7) peuvent être déplacés de manière commandée et régulée indépendamment les uns des autres.

3. Dispositif selon la revendication 2, **caractérisé en ce qu'**il présente, vu dans le sens de transport, une section de début (12) montante, une section centrale (13) s'étendant de manière horizontale par rapport au plan de transport (6) et une section de fin (14) réalisée de manière arrondie, ou que la came de commande (10) présente, vue dans le sens de transport, une section de début (12) montante, une section centrale (13) s'étendant de manière horizontale par rapport au plan de transport (6) et une section de fin (14) descendante inclinée en permanence de manière similaire en direction de la section de début.

4. Dispositif selon la revendication 2 ou 3, **caractérisé en ce que** la section de fin (14) est réalisée de manière plus petite dans une extension axiale que la section centrale (13) et que la section de début (12), ou que la section de fin (14) et la section de début (12) présentent une extension axiale identique, sont toutefois plus courtes que la section centrale (13).

5. Dispositif selon l'une quelconque des revendications précédentes, **caractérisé en ce que** la section centrale (13) présente des éléments (16, 17) pouvant être coulissés les uns par rapport aux autres, de sorte que l'extension axiale de la section centrale (13) et ainsi de l'ensemble de la came de commande (10) peut être réglée en continu entre une extension maximale et une section minimale, dans lequel de manière préférée la section centrale (13) est formée à partir de deux éléments (16, 17) montés de manière à pouvoir être coulissés.

6. Dispositif selon l'une quelconque des revendications précédentes, **caractérisé en ce que** l'élément de guidage (9) du segment de tri (5) est réalisé sous la forme d'un rouleau.

7. Dispositif selon l'une quelconque des revendications précédentes, **caractérisé en ce que** le segment de tri (5) présente une articulation de poussée (19), qui supporte un élément porteur (20), qui présente une branche d'axe (21) disposée de manière parallèle par rapport au plan de transport et une branche de rouleau (22) disposée de manière perpendiculaire par rapport à celle-ci.

8. Dispositif selon la revendication 7, **caractérisé en ce que** l'axe de prise (15) est disposé au niveau de la branche d'axe (21), et que l'élément de guidage (9) est disposé au niveau de la branche de rouleau (22).

9. Dispositif selon l'une quelconque des revendications précédentes, **caractérisé en ce que** les segments de tri (5) présentent un élément de ressort (23) de sorte que l'élément porteur (20) conserve sa position la plus basse du fait de l'accumulateur de force.
